# EUROPÄISCHE PATENTSCHRIFT

(11) **EP 0 522 264 B1**
(45) Veröffentlichungstag und Bekanntmachung des Hinweises auf die Patenterteilung: **21.02.1996**
(21) Anmeldenummer: 92108138.6
(22) Anmeldetag: 14.05.1992
(51) Int. Cl.: F15B 15/26

(54) **Mit einem Klemmstück versehener pneumatischer Antrieb, insbesondere für eine Sicherheitseinrichtung**
Pneumatic actuator with locking means, especially for safety devices
Vérin pneumatique avec des moyens de blocage, en particulier pour un dispositif de sécurité

(30) Priorität: 26.06.1991 DE 4121073
(43) Veröffentlichungstag der Anmeldung: 13.01.1993
(73) Patentinhaber: ITT Automotive Europe GmbH, D-60488 Frankfurt am Main (DE); MERCEDES-BENZ AG, D-70327 Stuttgart (DE)
(72) Erfinder: Braun, Achim, W-5223 Nümbrecht (DE)
(74) Vertreter: Portwich, Peter

(56) Entgegenhaltungen:
- AT-A- 328 327

## Beschreibung

Die vorliegende Erfindung betrifft einen pneumatischen Antrieb gemäß dem Oberbegriff des Anspruchs 1.

Ein derartiger Antrieb ist aus der AT-A-308307 bekannt. Der bekannte Antrieb ist mit zwei Klemmstücken versehen, welche jeweils eine der beiden möglichen Bewegungsrichtungen eines Kolbens sperren. Die Klemmstücke sind jeweils über einen Ringkolben entriegelbar, wobei jeweils für eine Bewegung des Kolbens nur der Ringkolben pneumatisch das zugehörige Klemmstück entriegelt, welches die gewünschte Bewegung des Kolbens sperrt. Da in Ruheposition der Klemmstücke jede Bewegung des Kolbens verhindert wird, ist auch für beide Bewegungsrichtungen des Kolbens eine Entriegelung eines Klemmstücks notwendig. Da es sich um einen Antrieb für eine pneumatische Stellvorrichtung zum Öffnen und Schließen von Abdeckörpern und Fenstern oder Türen handelt, ist für den bekannten Antrieb eine langsame Betätigung vorgesehen. Für Sicherheitseinrichtungen, welche gerade im Gefahrenfall schnell ausfahren bzw. ausklappen sollen, ist ein derartiger langsamer Antrieb unzureichend.

Als Sicherheitseinrichtungen können dabei beispielsweise ein schwenkbarer Knieschutz, wie er in der P 41 02 982.8 beschrieben wurde, ein ausfahrbarer Stoßfänger, wie er in der P 41 13 031 beschrieben wurde, oder ein ausfahrbarer Überrollbügel, wie er in der DE-OS 2822461 beschrieben wurde, gelten.

All diesen Sicherheitseinrichtungen ist es gemeinsam, daß zum einen ein Komfortantrieb vorgesehen ist, welcher in zwei entgegengesetzten Richtungen in vergleichsweise langsamer Bewegung die Stellung der Sicherheitseinrichtung an die jeweiligen Bedürfnisse des Fahrgastes bzw. des Fahrzeugs anpaßt. Zum anderen aber ist ein Schnellantrieb vorgesehen, welcher die Sicherheitseinrichtung unmittelbar vor dem Eintritt eines Unfalls mit großer Geschwindigkeit in eine Richtung antreibt, in welcher die Sicherheitseinrichtung primär zum Schutz des Fahrgastes dient. Dabei wird nicht nur die Sicherheitseinrichtung unter allen Umständen in die den Fahrgast schützende Richtung ausgefahren, sondern es muß gleichzeitig auch noch verhindert werden, daß während des Ablaufs des Unfalls die Sicherheitseinrichtung in eine Richtung eingefahren werden kann, welche die Gefahr für den Fahrgast vergrößert.

Die Aufgabe der vorliegenden Erfindung besteht darin, einen Antrieb der eingangs genannten Art derart auszustatten, daß eine Sicherheitseinrichtung schnell in die für den Gefahrenfall vorgesehene Position gebracht wird.

Diese Aufgabe wird gelöst in Verbindung mit den kennzeichnenden Merkmalen des Anspruchs 1. Demnach sorgt eine Druckpumpe für einen sogenannten Vorantrieb, während ein Druckspeicher sofort einen hohen Druck zur Verfügung zu stellen vermag, so daß eine schnelle Bewegung in die Gefahrenposition möglich ist.

Wenn das Klemmstück gemäß Anspruch 2 nur einseitig wirkt und eine Bewegung in die für den Gefahrenfall vorgesehene Sicherheitsposition nicht behindert, so ist es völlig ausreichend, wenn lediglich die Druckpumpe, nicht aber der Druckspeicher auf eine Stelleinrichtung zur Entriegelung des Klemmstücks einwirkt.

Um eine Rückwärtsbewegung des Betätigungsgliedes in einfacher Weise zu ermöglichen, empfiehlt sich in Weiterbildung der Erfindung die Anwendung der Merkmalskombination nach Anspruch 3. Es wird hierdurch das Betätigungsglied in beiden Richtungen durch ein gleichartiges Antriebsmittel beaufschlagt was zu erheblichen Vorteilen führen kann, wie weiter unten noch erläutert wird.

Um den Aufbau des Antriebs noch weiter zu vereinfachen, empfiehlt sich die Anwendung der Merkmalskombination nach Anspruch 4. Das bedeutet, daß die Druckquelle für den Antrieb nicht nur wie weiter oben beschrieben, zum Entriegeln des Betätigungsgliedes bei einer Komfortbewegung in der ersten Richtung ausgenutzt wird sondern gleichzeitig auch noch die Möglichkeit einer Verriegelung außer Kraft gesetzt wird, wenn eine langsame Komfortbewegung in der entgegengesetzten zweiten Richtung erwünscht wird, die anderenfalls wegen der automatisch einsetzenden Verriegelung blockiert wäre.

Bei der Anwendung diese Maßnahmen empfiehlt sich in vorteilhafter Weiterbildung zur Vereinfachung der Verriegelungssteuerung die Anwendung der Merkmalskombination nach Anspruch 5. Hierdurch wird durch einen einzigen Steuerkolben gleichzeitig die Entriegelung des Klemmstücks bewirkt wenn das Betätigungsglied in einer ersten Richtung bewegt werden soll und andererseits eine mögliche Verriegelung verhindert wenn das Betätigungsglied in der entgegengesetzten zweiten Richtung bewegt werden soll. Der erfindungsgemäße Antrieb wird auf diese Weise noch weiter vereinfacht.

Um den ersten und den zweiten Druckgeber in einfacher Weise miteinander zu vereinen und mit einer einzigen Druckquelle auszukommen, empfiehlt sich in vorteilhafter Weiterbildung der Erfindung die Verwendung der Merkmalskombination nach Anspruch 6. Da das Betätigungsglied immer nur in einer einzigen Richtung bewegt werden kann, und das gleichzeitige Wirken beider Druckgeber keinen nutzbringenden Effekt hat, wird für die beiden Druckgeber eine einzige Druckpumpe verwendet, die wahlweise Unterdruck oder Überdruck fördert.

Dabei kann der Speicher durch eine gesonderte Pumpe auf den vorgesehenen hohen Druck aufgeladen werden. Es kann aber auch in Vereinfachung des Antriebs die Merkmalskombination nach Anspruch 7 angewendet werden. Hierbei wird die Druckpumpe zum Antrieb des Betätigungsgliedes gleichzeitig auch noch zum Aufladen des Speichers angewendet. Dies ist in sofern unkritisch, als derartige pneumatische Speicher sehr zuverlässig arbeiten, sodaß auch bei einem Ausfall der Druckpumpe für längere Zeit der Druckspeicher aufgeladen bleibt und damit für eine Betätigung für den Crashfall zur Verfügung steht. Zur Durchführung der notwendigen Umsteuervorgänge empfiehlt sich in vorteilhafter Weiterbildung der Erfindung die Anwendung der Merkmalskombination nach Anspruch 8. Hierdurch wird durch die Pumpe der Speicher im Bedarfsfalle auf seinen Höchstdruck aufgeladen. Besitzt der Speicher seinen Höchstdruck und ist kein Crashfall gegeben, so bleibt das Ventil in beiden Richtungen geschlossen, da vom Speicher weder Druck aufgenommen noch abgegeben werden soll.

Wie weiter oben schon erläutert, können im Rahmen der Erfindung für das Klemmstück unterschiedliche Ausgestaltungen gewählt werden. Eine besonders einfache Ausgestaltung ergibt sich in Weiterbildung der Erfindung durch die Merkmalskombination nach Anspruch 9. Hierbei greift das Klemmstück an einem Betätigungsstößel an, sodaß durch Reibschluß der Betätigungstößel an einer Bewegung gehindert wird. Dabei wird das Klemmstück derart eingesetzt, daß es bei einer Bewegung in der ersten Richtung die Bewegung des Betätigungsstößel zuläßt, während bei einer Bewegung in der entgegengesetzten Richtung das Klemmstück sich an dem Betätigungsglied verklemmt und so die diese Bewegungsrichtung bewirkende Kraft zur Arretierung und Blockierung der Stößelbewegung ausgenutzt wird.

Eine besonders einfache Ausgestaltung für den Klemmschuh ergibt sich nach Anspruch 10. Dabei können auch mehr als zwei einander gegenüber liegende Klemmschuhe eingesetzt werden. In der Regel wird man aber die Klemmschuhe im gleichen Winkelabstand um das Betätigungsglied verteilen.

Der vorliegende Antrieb eignet sich besonders für eine Knieschutzplatte, die im Crashfall vor die Knie des Fahrgastes geschwenkt wird, um ihn an einer Bewegung in den unteren Bereich des Fahrgastraumes zu hindern. Die Knieschutzplatte hat damit eine ähnliche Wirkung wie ein Luftsack. Einzelheiten hierzu sind in der Anmeldung P 4102982.8 beschrieben. Die vorliegende Erfindung ist aber mit Vorteil auch für andere Sicherheitseinrichtungen einsetzbar wie sie eingangs schon geschildert wurden. Dies gilt beispielsweise für einen ausfahrbaren Stoßfänger insbesondere aber für einen ausfahrbaren Überrollbügel.

Um das Ausfahren des Betätigungsgliedes im Crashfall zu beschleunigen, empfiehlt sich in Weiterbildung der Erfindung die Merkmalskombination nach Anspruch 12. Es wird also hier durch ein schnelles Schalten des Magnetventils in sehr kurzer Zeit der Überdruck im Druckspeicher zu dem Kolben des Antriebs geleitet. Gleichzeitig kann das Magnetventil dazu dienen, die möglicherweise gerade für den Komfortantrieb pumpende Pumpe von dem Zylinder abzuschalten. Damit soll verhindert werden, daß nicht ein Teil des Speicherdruckes in die Pumpe verloren geht. Insbesondere aber soll verhindert werden, daß die Pumpe wirkungsmäßig entgegen der Wirkung des Druckspeichers fördert und damit seine Wirksamkeit herabsetzt.

Ein Ausführungsbeispiel der Erfindung wird nachfolgend anhand der Zeichnung erläutert. Darin zeigt:
- Fig. 1: in symbolischer Darstellung einen Antrieb, bei dem zwei Betätigungsstößel zueinander parallel angetrieben werden, wie dies beispielsweise für Sicherheitseinrichtungen vielfach üblich ist, und
- Fig. 2: einen in geschnittener Darstellung ausgeführten Ausschnitt aus Fig. 1, der im wesentlichen die Klemmeinrichtung, den Zylinder, den Kolben und das Betätigungsglied betrifft.

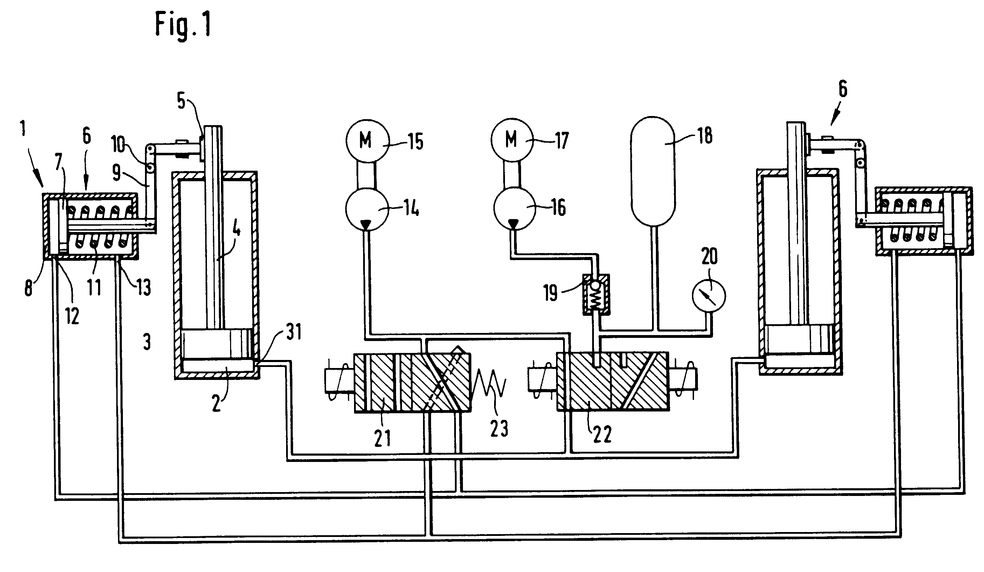

Fig. 1 zeigt in doppelter Ausführung eine Antriebseinheit 1 auf der rechten und linken Seite der Figur. Die Antriebseinheit 1 besteht im wesentlichen aus einem Zylinder 2, an dessen Mantelfläche ein Kolben 3 in Richtung der Längsachse eine Betätigungsgliedes 4 verschiebbar angeordnet ist. Neben dem Kolben 3 wirkt auf das Betätigungsglied 4 noch ein zur Arretierung des Betätigungsgliedes dienendes Klemmstück 5 ein, welches in der Lage ist, im Bedarfsfalle das Betätigungsglied 4 durch Reibschluß zu halten. Auf diese Weise wird durch das Klemmstück 5 zumindest bei einer in der Zeichnung nach unten gerichteten Bewegung das Betätigungsglied durch das Klemmstück 5 festgehalten. Es ist dabei nicht unbedingt notwendig, daß das Klemmstück sich stark verklemmt. Es kann im Rahmen der Erfindung auch genügen, wenn die Reibkräfte derart groß sind, daß allein hierdurch ohne Verklemmen das Betätigungsglied sicher gehalten werden kann.

Um das Klemmstück 5 auf das Betätigungsglied einwirken zu lassen, dient eine Stelleinrichtung 6 mit einem Stellkolben 7, einem Stellzylinder 8 und einem Stellhebel 9, welcher über ein Stellgelenk 10 drehbar gelagert ist. Eine Stellfeder 11 sorgt für eine Vorspannung, die bei Abwesenheit von Druck versucht, den Stellhebel in einer Richtung zu drehen, welcher das Klemmstück 5 gegenüber dem Betätigungsglied 6 vorspannt. Hierdurch wird durch die Stellfeder 11 auch bei Abwesenheit eines Eingangsdruckes an den beiden Stellzylindereingängen dafür gesorgt, daß das Klemmstück 5 in einem zumindest leichten Reibeingriff gegenüber dem Betätigungsglied 4 bleibt, was insbesondere dann wichtig ist, wenn eine nach unten gerichtete Rückwärtsbewegung des Stellgliedes zu einem selbsttätigen Verklemmen des Klemmstücks 5 gegenüber dem Betätigungsglied 4 führen soll.

In Fig. 1 ist weiterhin noch eine Druckpumpe 14 vorgesehen, welche durch einen Pumpenmotor 15 angetrieben wird, sowie eine Ladepumpe 16, die von dem Motor 17 angetrieben wird. Ein Druckspeicher 18 ist über ein Ladeventil 19 mit der Ladepumpe 16 verbunden, wobei das Ventil 19 nur dann Druck zu dem Druckspeicher 18 von der Ladepumpe 16 durchläßt, wenn deren Druck größer als der Druck im Ladespeicher 18 ist und dessen Druck den zulässigen Höchstdruck noch nicht überschritten hat. Der Ladedruck des Druckspeichers 18 läßt sich an einem Manometer 20 ablesen.

Die Druckpumpe 14 fördert in Abhängigkeit von der Drehrichtung des Motors 15 je nach gewünschter Bewegungsrichtung des Betätigungsgliedes 4 entweder Überdruck oder Unterdruck, der beispielsweise maximal bei einer Höhe von 0,6 bar liegen kann. Bei der Ladepumpe handelt es sich um eine Hochdruckpumpe, die bei einem Hochdruck von 2,8 bar zu fördern vermag und den Druckspeicher 18 dementsprechend aufläd.

Die Arbeitsweise der Anordnung nach Fig. 1 wird nachfolgend kurz erläutert. Soll die Sicherheitseinrichtung durch eine Bewegung des Betätigungsgliedes 4 nach oben langsam ausgefahren werden, so wird der Motor 15 eingeschaltet und die Druckpumpe 14 fördert einen Überdruck von etwa 0,6 bar über das Stellventil 21 in den Stellzylinder 8. Hierdurch wird der Stellkolben 7 in der Zeichnung nach rechts entgegen der Wirkung der Stellfeder 11 bewegt, wodurch die Wirkung des Klemmstückes 5 aufgehoben wird, da der Stellhebel 9 um das Stellgelenk 10 in Fig. 1 entgegen dem Uhrzeigersinn geschwenkt wird. Das Stellventil 21 ist dabei durch die Wirkung der Vorspannungsfeder 23 in seiner Ruhestellung.

Der Überdruck der Druckpumpe 14 wird über ein Drucksteuerventil 22 zu dem Zylinder 2 geleitet, wodurch der Kolben 3 des Betätigungsgliedes 4 in Fig. 1 nach oben verschiebt. Hierdurch kann beispielsweise eine Knieprallplatte, ein Stoßdämpfer oder ein Überrollbügel langsam ausgefahren werden.

Soll der Überrollbügel im Komfortantrieb langsam eingefahren werden, so schaltet man den Pumpenmotor 15 derart ein, daß er in entgegengesetzter Richtung läuft, sodaß die Druckpumpe 14 einen Unterdruck von etwa 0,6 bar fördert. Gleichzeitig wird das Stellventil 21 entgegen der Wirkung der Vorspannungsfeder 23 in die in Fig. 1 nicht dargestellte Lage gebracht, sodaß der Unterdruck der Druckpumpe 14 zu dem Eingang 13 des Stellzylinders 8 gelangt. Durch diesen Unterdruck wird der Stellkolben 7 wiederum entgegen der Wirkung der Stellfeder nach rechts bewegt, wodurch erneut das Klemmstück 5 vom Stellglied 4 abhebt und dessen Bewegung freigibt.

Das Drucksteuerventil 22 verbleibt dabei in seiner Fig. 1 gezeichneten Ruhelage, sodaß der Unterdruck der Druckpumpe 14 zu dem Zylindereingang 31 des Zylinders 2 gelangt, woraufhin sich der Kolben 3 mit dem Betätigungsglied 4 in Fig. 1 nach unten bewegt. Diese Bewegung entspricht bei der Sicherheitseinrichtung beispielsweise einem Einfahren eines Überrollbügels oder eines Stoßfängers. Diese Rückwärtsbewegung in der zweiten Richtung erfolgt, wie bei einem Komfortantrieb üblich, in verhältnismäßig langsamer Bewegung.

Wird nun durch in Fig. 1 nicht dargestellte Sensoren ein bevorstehender Unfall gemeldet, so schaltet das Drucksteuerventil 22 in seine in Fig. 1 nicht dargestellte Lage. Hierbei wird der Überdruck in Höhe von beispielsweise 2,8 bar des ungefähr 0,7 1 fassenden Druckspeichers 18 in den Zylinder 2 gepresst, sodaß der Kolben 3 mit dem Betätigungsglied 4 sehr schnell in der Zeichnung nach oben befördert wird, was einem schnellen Ausfahren der Knieprallplatte, des Stoßdämpfers oder des Überrollbügels entspricht. Der Kolben 3 befördert dabei das Betätigungsglied 4 in Fig. 1 sehr schnell nach oben. Diese Bewegung kann auch nicht durch die Reibkraft des Klemmstücks 5 behindert werden, da der Druck hierfür im Zylinder 2 zu hoch ist. Soweit das Klemmstück durch die Bewegung des Stellgliedes selbsttätig in seine verriegelnde Blockierstellung gebracht wird, ist darauf zu achten, daß die Blockierrichtung der augenblicklich beschriebenen Richtung entgegengesetzt sein muß.

Durch zusätzliche, in der vorliegenden Figur nicht dargestellte Maßnahmen, ist es möglich, einen Teil des Überdrucks auch zum Öffnen des Klemmstücks 5 auszunutzen, etwa indem ein Teil dieses Überdrucks an den Eingang 12 des Zylinders 8 gelegt wird. Es ist auch möglich, den Überdruck der Druckpumpe 14 über das Stellventil 21 in der eingangs beschriebenen Weise an den Eingang 12 des Zylinders 8 zu legen, soweit sicher gestellt ist, daß die Pumpe 14 schnell genug reagiert.

Bei der Übertragung des Drucks des Druckspeichers 18 im Crashfall ist das Drucksteuerventil 22 in seiner in Fig. 1 nicht dargestellten linken Lage, in der der Druck der Ladepumpe 16 abgetrennt ist.

In Fig. 1 ist auf der rechten Seite noch eine zweite Stelleinrichtung 6 gezeichnet, die parallel zur linken Stelleinrichtung 6 arbeitet. Es können aber auch im Bedarfsfalle noch mehr Stelleinrichtungen parallel geschaltet sein, etwa um Knieprallplatten der hinteren Fahrgäste ebenfalls auszuschwenken oder um Überrollbügel nicht nur Fahrgäste auf den Vordersitzen sondern auch auf den Hintersitzen gleichzeitig auszufahren.

Zur weiteren Vereinfachung der Erfindung ist es möglich, die Druckpumpe 14 auch gleichzeitig zum Aufladen des Druckspeichers 18 mit auszunutzen, sodaß die Ladepumpe 16 mit Motor 17 entfallen kann.

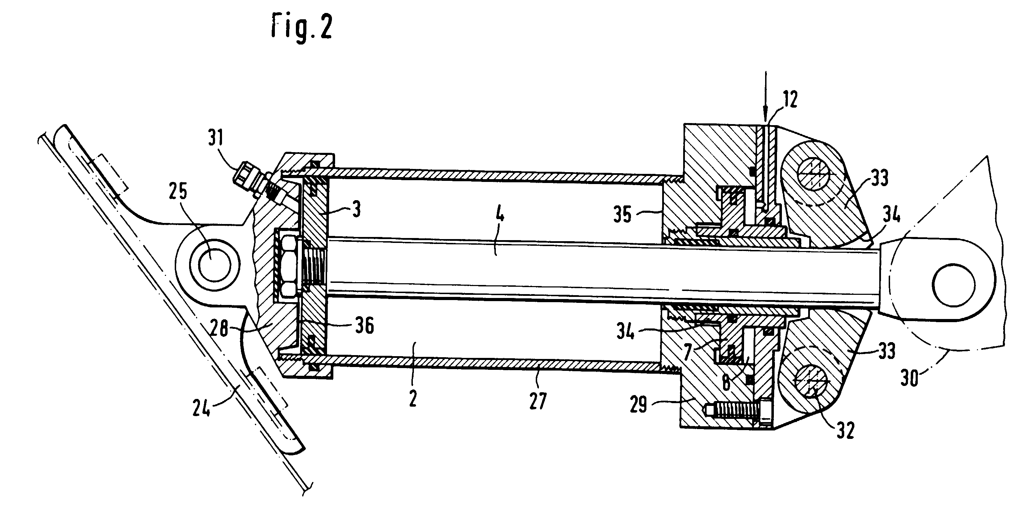

Fig. 2 zeigt eine praktische Ausführungsform des Antriebs gemäß Fig. 1, wobei allerdings die Pumpen, der Ladespeicher und die Ventile 21, 22 weggelassen wurden. In Fig. 2 ist der Zylinder 2 am Gehäuse 24 eines Kraftfahrzeugs in dem Drehlager 25 drehbar befestigt. Der Zylinder 2 besteht im wesentlichen aus dem Zylindermantel 27, einem das Drehlager 25 tragenden Zylinderdeckel 28 und einem Zylinderkopf 29. In den Zylindermantel 27 ist der Kolben 3 geführt, welcher mit dem Betätigungsglied 4 lösbar verbunden ist. Das Betätigungsglied 4 ist an seinem in Fig. 2 rechten Ende in dem Zylinderkopf 29 gleitend gelagert und greift an dem Sicherheitselement 30 drehbar gelagert an. Am in Fig. 2 linken Ende des Zylinders 2 befindet sich der Zylindereingang 31. Am Zylinderkopf 29 sind in zwei Klemmlagern 32 zwei Klemmschuhe 33 drehbar und exzentrisch derart gelagert, daß sie mit ihrer kreissektorförmigen gegenüber dem Drehlager 32 exzentrisch angeordneten Kontur an der Oberfläche des Betätigungsgliedes 4 einander gegenüberliegend angreifen können.

Die Klemmschuhe 33 sind nun derart angebracht, daß bei einer in der Zeichnung nach rechts gerichteten Bewegung des Betätigungsgliedes 4 die Wirkung der Klemmschuhe 33 aufgehoben ist, und das Betätigungsglied 4 sich frei nach rechts bewegen kann. Bei einer entgegengesetzten Bewegung des Betätigungsgliedes 4 werden normalerweise die Klemmschuhe 33 in der Zeichnung nach links mitgenommen, sodaß diese sich gegenüber dem Betätigungsglied verklemmen und keine weitere Bewegung des Betätigungsgliedes 4 mehr zulassen. Dies kann man als sich selbst verstärkende Reibungswirkung auffassen. Für die Arbeitsweise des erfindungsgemäßen Antriebs ist auch die innerhalb des Zylinderkopfes 29 angeordnete Stelleinrichtung wichtig, welche im wesentlichen aus einem Stellkolben 7, einem Stellzylinder 8 und einem Stellglied 34 gebildet ist, welches wirkungsmäßig dem Stellhebel 9 entspricht. Der Stellzylinder 8 ist mit dem Stelleingang 12 verbunden, sodaß der von der in Fig. 2 nicht dargestellten Druckpumpe kommende Druck dem Stellzylinder 8 zugeführt werden kann.

Der in Fig. 2 dargestellte Antrieb arbeitet wie folgt. Soll das Betätigungsglied 4 in Fig. 2 nach rechts bewegt werden (was einer Bewegung in Fig. 1 nach oben entspricht) so wird auf den Eingang 31 ein Druck gegeben, welcher den Kolben 3 und damit das Betätigungsglied 4 nach rechts bewegt. Diese Bewegung wird durch die Klemmschuhe 33, wie weiter oben schon erläutert, nicht behindert, da diese, selbst wenn sie sich im Reibeingriff befinden, durch die Bewegung des Betätigungsgliedes 4 in ihre blockierfreie Lage gebracht werden.

Der dem Eingang 12 des Stellzylinders 8 ebenfalls zugeführte Überdruck der Druckpumpe 14 hat keinen Einfluß, da dieser den Stellkolben 7 und damit das einstückig mit dem Stellkolben verbundene Stellglied 34 in die in Fig. 2 linke Endlage befördert, in der das Stellglied 34 auf die Klemmschuhe 33 keinen Einfluß hat. In diesem Zustand kann das Betätigungsglied 4 so weit nach rechts ausfahren, daß der Kolben 3 an der Kopfwand 35 anschlägt. Soll der Kolben und damit das Betätigungsglied in einer Zwischenlage bleiben, so wird entsprechend früh der Druck am Eingang 31 zurückgenommen und das Betätigungsglied bleibt aufgrund der Reibung der Führung für den Kolben 3 des Betätigungsgliedes 4 (insbesondere der entsprechenden Dichtungen) in der Zwischenlage stehen.

Ein Versuch in diesem Zustand das Betätigungsglied 4 durch die Wirkung des Sicherheitselements 30 nach links zu verschieben wird daran scheitern, daß die Klemmschuhe 33 hierdurch nach links schwenken und die Bewegung des Betätigungsgliedes nach links blockieren.

Soll nach einer derartigen Blockade oder ohne daß eine Blokkade vorher stattgefunden hat, das Betätigungsglied 4 im Komfortantrieb langsam nach links gefahren werden, so wird ausgehend von der Druckpumpe 14 in Fig. 1 ein Unterdruck sowohl auf den Zylindereingang 31 als auch auf den Stellzylindereingang 12 gegeben. Der Stellkolben 7 wird zusammen mit dem Stellglied 34 hierdurch nach rechts bewegt, wodurch die Klemmschuhe 33 entweder aus ihrer Blockierstellung nach rechts geschwenkt werden oder eine blockierende Schwenkbewegung verhindert wird. Hierdurch ist eine Bewegung des Kolbens 3 aufgrund des Unterdrucks am Eingang 31 nach links möglich, wodurch das Betätigungsglied nach links befördert wird. Die maximale linke Stellung ist durch den Anschlag des Kolbens 3 an der Deckelwand 36 gegeben. Auch eine Zwischenstellung ist dementsprechend wieder möglich, wie weiter oben schon erläutert.

Im Crashfall liegt sowohl an dem Zylindereingang 31 als auch an dem Stellzylindereingang 12 ein hoher Druck von beispielsweise 2,8 bar oder ein gewisser Anteil hiervon an. Hierdurch wird zum einen das Stellglied 34 nach links befördert und weiterhin das Betätigungsglied 4 durch den hohen Druck sehr schnell nach rechts geschoben, wobei gegebenenfalls die Reibung der Klemmschuhe 33 am Betätigungsglied überwunden wird. Der Kolben wird dabei bis zum Anschlag an der Kopfwand 35 nach rechts verschoben. Da das Stellglied 34 in seiner linken Endlage verbleibt, können in einem Crashfall die Klemmschuhe 33 sich mit dem Betätigungsglied nach links bewegen, wodurch sie die Bewegung des Betätigungsgliedes 4 nach links blockieren.

In diesem Falle wird wie weiter oben schon erläutert regelmäßig die Wirkung der Druckpumpe auf den Zylinder 2 abgeschaltet, sodaß das Stellglied 34 nicht etwa durch einen Unterdruck an der Druckpumpe 14 in eine rechte Entriegelungsstellung gebracht werden kann, in der ein Blockieren infolge der Klemmschuhe des Betätigungsgliedes bei einem Unfall verhindert wird. Damit ist unabhängig in welcher Richtung der Komfortantrieb vor dem Auftreten des Crashfalles gearbeitet hat die blockierende Wirkung der Klemmschuhe bei einem Unfall sichergestellt.

Der erfindungsgemäße Antrieb ist auch bei weiteren Sicherheitseinrichtungen wie beispielsweise Sicherheitsgurten oder einer versenkbaren Lenksäule sowie als Überrollbügel dienenden Kopfstütze. Hinsichtlich der Funktionsweise ist dabei allerdings unter Umständen die Wirkungsrichtung der Klemmschuhe anzupassen. Die Klemmstücke können vorteilhaft auch mit anderen als pneumatischen Antrieben im Rahmen der Erfindung zusammenwirken wie mechanischem Spindelantrieb, Elektroantrieb oder magnetischem Antrieb.

## Patentansprüche

1. Pneumatischer Antrieb mit einem zu einem ersten Druckgeber (14) verbindbaren Zylinder (2), einen in dem Zylinder durch den Druck im Zylinder (2) verschiebbaren Kolben (3), einem von dem Kolben angetriebenen, in zwei Richtungen bewegbaren Betätigungsglied (4), wobei das Betätigungsglied (4) in einer ersten Richtung bewegt wird, wenn der Druck des Druckgebers den Kolben verschiebt, wobei mindestens ein mit dem Betätigungsglied (4) zusammenwirkendes Klemmstück (5, 33) vorgesehen ist, welches eine Bewegung des Betätigungsgliedes (4) zumindest in eine der ersten Richtung entgegengesetzt gerichteten zweiten Richtung aufgrund einer entsprechend gerichteten Kraft verhindert, dadurch **gekennzeichnet**, daß ein zweiter Druckgeber (18) vorhanden ist, daß der erste und der zweite Druckgeber (14,18) in gleicher Richtung wirken, daß der erste Druckgeber zum Komfortantrieb von einer Druckpumpe und der zweite Druckgeber zum Schnellantrieb von einem Druckspeicher gebildet ist.

2. Antrieb nach Anspruch 1, dadurch **gekennzeichnet**, daß Klemmstück nur in der zweiten Richtung wirksam ist und daß eine pneumatisch betätigte Stelleinrichtung (5-10) vorgesehen ist, die die Klemmfunktion des Klemmstücks (5, 33) steuert und die an den ersten, nicht aber an den zweiten Druckgeber anschließbar ist.

3. Antrieb nach einem der Ansprüche 1 und 2, dadurch **gekennzeichnet**, daß ein dritter Druckgeber (14) vorgesehen ist, dessen Ausgangsdruck den Kolben (3) in der zweiten Richtung verschiebt und der erste, der zweite oder der dritte Druckgeber mit dem Kolben wahlweise über eine Drucksteuerung verbunden ist.

4. Antrieb nach Anspruch 3, dadurch **gekennzeichnet**, daß der dritte Druckgeber (14) über die Drucksteuerung mit der Stelleinrichtung (5-10) verbindbar ist.

5. Antrieb nach Anspruch 4, dadurch **gekennzeichnet**, daß die Stelleinrichtung (5-10) mit einem Stellkolben (7) versehen ist, welcher über ein Stellglied (9, 10) derart wirksam ist, daß er aufgrund der Wirkung des Drucks des ersten Druckgebers (14) eine mögliche Verriegelung des Klemmstücks (5, 34) nicht behindert und aufgrund des Drucks der dritten Druckwelle die Klemmung des Klemmstücks (5, 33) verhindert.

6. Antrieb nach Anspruch 5, dadurch **gekennzeichnet**, daß die erste und die dritte Druckquelle durch eine einzige Druckpumpe (14) gebildet sind, die wahlweise als erste Druckquelle wirkt, indem sie Überdruck und wahlweise als dritte Druckquelle wirkt, indem sie Unterdruck fördert und die über eine einzige Verbindungsleitung mit dem Zylinder (2) verbunden ist.

7. Antrieb nach einem der vorhergehenden Ansprüche, dadurch **gekennzeichnet**, daß die Druckpumpe (14) und der Speicher (18) über ein Ladeventil (19) miteinander verbunden sind.

8. Antrieb nach Anspruch 7, dadurch **gekennzeichnet**, daß das Ladeventil (19) bei nicht aufgeladenem Speicher den Druck nur in Richtung von der Pumpe (14) zum Speicher (18) leitet und bei Maximaldruck des Speichers (18) in beiden Richtungen sperrt.

9. Antrieb nach einem der Ansprüche 1 bis 8, dadurch **gekennzeichnet**, daß das Klemmstück (5, 33) durch im qleichen Winkelabstand um das Befestigungsglied angeordnete, insbesondere zwei einander gegenüber liegende, an dem als Betätigungsstößel ausgestalteten Betätigungsglied (4) angreifende Klemmschuhe (33) gebildet ist.

10. Antrieb nach Anspruch 9, dadurch **gekennzeichnet**, daß jeder der Klemmschuhe (33) durch ein exzentrisch gelagertes Kreissektorstück (33) gebildet ist.

11. Antrieb nach einem der Ansprüche 1 bis 10, dadurch **gekennzeichnet**, daß das Betätigungsglied (4) auf eine Knieschutzplatte (33) einwirkt.

12. Antrieb nach Anspruch 11, dadurch **gekennzeichnet**, daß das Steuerventil ein Magnetventil ist.

## Claims

1. A pneumatic drive including a cylinder (2) connectible to a first pressure generating unit (14), a piston (3) slidable within the cylinder by the pressure in the cylinder (2), an actuating member (4) driven by the piston and movable in two directions, the actuating member (4) being moved in a first direction when the pressure of the pressure generating unit displaces the piston, wherein at least one clamping element (5, 33) interacting with the actuating member (4) is provided which prevents movement of the actuating member (4) at least into a second direction which is opposed to the first direction, due to a force being directed accordingly, **characterized** in that a second pressure generating unit (18) is provided, in that the first and the second pressure generating units (14, 18) act in the same direction, in that the first pressure generating unit is formed by a pressure pump for the comfort drive and the second pressure generating unit is formed by a pressure accumulator for the quick drive.

2. A drive as claimed in claim 1,
**characterized** in that the clamping element acts in the second direction only, and in that a pneumatically actuated positioning device (5-10) is provided and controls the clamping function of the clamping element (5, 33) and is connectible to the first pressure generating unit, but not to the second pressure generating unit.

3. A drive as claimed in anyone of claims 1 and 2,
**characterized** in that a third pressure generating unit (14) is provided whose output pressure slides the piston (3) in the second direction, and in that the first, the second or the third pressure generating unit is connected to the piston at option by way of pressure control.

4. A drive as claimed in claim 3,
**characterized** in that the third pressure generating unit (14) is connectible to the positioning device (5-10) by way of the pressure control.

5. A drive as claimed in claim 4,
**characterized** in that the positioning device (5-10) is furnished with a positioning piston (7) which acts through a positioning element (9, 10) in such a manner that, due to the effect of the pressure of the first pressure generating unit (14), it does not hinder possible locking of the clamping element (5, 33) and that it prevents clamping of the clamping element (5, 33) due to the pressure of the third pressure source.

6. A drive as claimed in claim 5,
**characterized** in that the first and third pressure sources are constituted by one single pressure pump (14) which optionally acts as first pressure source by supplying pressure in excess of atmospheric pressure and as second pressure source by supplying vacuum, and which is connected to the cylinder (2) by one single connecting line.

7. A drive as claimed in anyone of the preceding claims,
**characterized** in that the pressure pump (14) and the accumulator (18) are interconnected through a loading valve (19).

8. A drive as claimed in claim 7,
**characterized** in that the loading valve (19) conveys the pressure exclusively in the direction from the pump (14) to the accumulator (18) when the accumulator is not loaded and locks in either direction in the presence of the maximum pressure of the accumulator (18).

9. A drive as claimed in anyone of claims 1 to 8,
**characterized** in that the clamping element (5, 33) is constituted by clamping shoes (33) being disposed at an equal angular distance around the fixing member, in particular by two clamping shoes arranged opposite each other and making catch at the actuating member (4) which has the shape of an actuating tappet.

10. A drive as claimed in claim 9,
**characterized** in that each one of the clamping shoes (33) is constituted by an eccentrically arranged circular sector-shaped element (33).

11. A drive as claimed in anyone of claims 1 to 10,
**characterized** in that the actuating member (4) acts upon a knee protecting plate (33).

12. A drive as claimed in claim 11,
**characterized** in that the control valve is a solenoid valve.

## Revendications

1. Actionneur pneumatique, comprenant un cylindre (2) pouvant être relié à un premier transmetteur de pression (14), un piston (3) pouvant être déplacé dans le cylindre par la pression dans le cylindre (2) et un élément d'actionnement (4) entraîné par le piston et pouvant être déplacé dans deux directions, l'élément d'actionnement (4) étant déplacé dans une première direction lorsque la pression du transmetteur de pression déplace le piston, au moins un organe de blocage (5, 33) coopérant avec l'élément d'actionnement (4) étant prévu, organe qui empêche un déplacement de l'élément d'actionnement (4) au moins dans une deuxième direction opposée à la première direction sur la base d'une force de direction correspondante,
**caractérisé** en ce qu'un deuxième transmetteur de pression (18) est présent, en ce que le premier et le deuxième transmetteurs de pression (14, 18) agissent dans la même direction, et en ce que le premier transmetteur de pression est une pompe refoulante pour l'actionnement de confort et le deuxième transmetteur de pression est un accumulateur de pression pour l'actionnement rapide.

2. Actionneur selon la revendication 1, **caractérisé** en ce que l'organe de blocage n'agit que dans la deuxième direction et en ce qu'est prévu un dispositif de commande (5-10) à actionnement pneumatique, qui commande la fonction de blocage de l'organe de blocage (5, 33) et qui peut être raccordé au premier transmetteur de pression, mais non au deuxième transmetteur de pression.

3. Actionneur selon la revendication 1 ou 2, **caractérisé** en ce qu'est prévu un troisième transmetteur de pression (14) dont la pression de sortie déplace le piston (3) dans la deuxième direction, et le premier, le deuxième ou le troisième transmetteur de pression est sélectivement relié au piston au moyen d'un dispositif de commande de pression.

4. Actionneur selon la revendication 3, **caractérisé** en ce que le troisième transmetteur de pression (14) peut être relié au dispositif de commande (5-10) par l'intermédiaire du dispositif de commande de pression.

5. Actionneur selon la revendication 4, **caractérisé** en ce que le dispositif de commande (5-10) est pourvu d'un piston de commande (7) qui, par l'intermédiaire d'un élément de commande (9, 10), agit de telle sorte qu'il n'empêche pas un éventuel verrouillage de l'organe de blocage (5, 33) sur la base de l'action de la pression du premier transmetteur de pression (14), et qu'il empêche le blocage de l'organe de blocage (5, 33) sur la base de la pression de la troisième source de pression.

6. Actionneur selon la revendication 5, **caractérisé** en ce que la première et la troisième sources de pression sont formées par une seule pompe refoulante (14) qui agît, sélectivement, soit comme première source de pression en foumissant une surpression, soit comme troisième source de pression en fournissant une dépression, et qui est reliée au cylindre (2) par l'intermédiaire d'une seule conduite de liaison.

7. Actionneur selon l'une quelconque des revendications précédentes, **caractérisé** en ce que la pompe refoulante (14) et l'accumulateur (18) sont mutuellement reliés par l'intermédiaire d'une soupape de charge (19).

8. Actionneur selon la revendication 7, **caractérisé** en ce que la soupape de charge (19), lorsque l'accumulateur n'est pas chargé, dirige la pression uniquement dans la direction allant de la pompe (14) à l'accumulateur (18), et ferme la liaison dans les deux directions lorsque l'accumulateur (18) est à la pression maximale.

9. Actionneur selon l'une quelconque des revendications 1 à 8, **caractérisé** en ce que l'organe de blocage (5, 33) est formé par deux patins de blocage (33) disposés à la même distance angulaire autour de l'élément d'actionnement, notamment en se faisant face, qui agissent sur l'élément d'actionnement (4) réalisé sous forme de poussoir d'actionnement.

10. Actionneur selon la revendication 9, **caractérisé** en ce que chacun des patins de blocage (33) est formé par une pièce (33) en forme de secteur de cercle, montée excentriquement.

11. Actionneur selon l'une quelconque des revendications 1 à 10, **caractérisé** en ce que l'élément d'actionnement (4) agit sur une plaque (30) de protection des genoux.

12. Actionneur selon la revendication 11, **caractérisé** en ce que la vanne-pilote est une électrovanne.
